# EUROPEAN PATENT APPLICATION

(11) **EP 2 407 868 A1**
(43) Date of publication of application: **18.01.2012**
(21) Application number: 10750769.1
(22) Date of filing: 01.03.2010
(51) Int. Cl.: G06F 3/048, G06F 3/041

(54) **INFORMATION PROCESSING DEVICE, INFORMATION PROCESSING METHOD, AND INFORMATION PROCESSION PROGRAM**

(30) Priority: 09.03.2009 JP 2009055407
(71) Applicant: Sony Corporation, Tokyo 108-0075 (JP)
(72) Inventor: HOMMA Fuminori, TOKYO 108-0075 (JP); NASHIDA Tatsushi, TOKYO 108-0075 (JP)
(74) Representative: Haines, Miles John L.S.
(86) International application number: PCT/JP2010/053706
(87) International publication number: WO 2010/104015

(57) **Abstract**

A user can be made to easily perform operation input without visually recognizing an operating face. Upon recognizing that an operation has been made as to the operating face of a touch panel (3C) where the contact portion of a finger is changed from the ball of the finger to the fingertip while keeping the finger in contact herewith, a music player device (1) estimates that the direction from the position where the fingertip has come into contact toward the position where the ball of the finger has come into contact is the wrist direction of the hand operating the touch panel (3C), and sets coordinate axes as to the operating face with this direction as the lower direction. The contact position where the finger has come into contact with the operating face is converted into coordinates based on the coordinate axes, and a command is input based on the coordinates. Thus, user operations can be recognized following the orientation of the hand of the user as to the operating face, so the user can be made to perform operations with the orientation of the hand of the user as to the operating face as a reference, and the user can be made to perform operations easily even without visually recognizing the operating face.

## Description

### Technical Field

The present invention relates to an information processing device, information processing method, and information processing program, which can be suitably applied to an information processing device having a touch panel, for example.

### Background Art

In recent years, information processing devices have come into widespread use which have a transparent panel on a display screen of a display unit, and are capable of operation input by a user touching an operating face on the touch panel.

As for such an information processing device, there are proposed those where a user selects display elements such as buttons or icons of the like displayed on the display screen by pressing with the finger by way of the operating face for example, and processing corresponding to the selected display element is executed.

Also, as for such an information processing device, there are proposed those where a user performs operations such as drawing a predetermined path on the screen displayed on the display screen by way of the operating face for example, and processing corresponding to the path is executed (e.g., see PTL 1).

### Citation List

PTL 1: Japanese Unexamined Patent Application Publication No. 2005-339420

### Summary of Invention

Now, the above-described information processing device is configured so as to display operating elements and screens which are to be operated on the display screen, and commands are input by these being operated via the operating face.

Accordingly, with the above-described information processing device, the user has had to perform operation input through the operating face by visually recognizing display elements and screens and the like displayed on the display screen, in order to perform desired operations.

Accordingly, in the event that the user has placed the above-described information processing device in a bag or a pocket of clothing, the information processing device has had to be taken out in order to visually recognize the operating face, which has been inconvenient.

The present invention has been made in light of the above points, and is to propose an information processing device, and information processing method, and an information processing program whereby users can easily operate even without visually recognizing an operating face.

An information processing device according to the present invention for solving the problems includes: a contact detecting unit which detects a position at which a finger has come into contact with an operating face of an operating unit; a coordinate conversion unit which converts the position detected by the contact detecting unit into coordinates, based on coordinate axes set on the operating face; a command input unit which inputs commands, based on coordinates obtained from the coordinate conversion unit; an operation recognizing unit which recognizes that an operation has been performed as to the operating face in which, with the finger kept in contact with the operating face, the contact portion is changed from the ball of the finger to the tip, or the opposite thereof; and a coordinate axis setting unit which, upon the operation being recognized by the operation recognizing unit, estimates the direction from the position where the ball of the finger has come into contact toward the position where the tip of the finger has come into contact as being the wrist direction of the hand operating the operating unit, and sets coordinate axes on the operating face in accordance with the direction.

By setting coordinate axes of the operating face according to the orientation of the hand of the user as to the operating face in this way, the operations of the user can be recognized following the orientation of the hand of the user as to the operating face. Accordingly, regardless of the orientation of the hand of the user as to the operating face, the user can be made to perform operations with the orientation of the hand of the user as to the operating face as a reference at all times.

Also, an information processing device according to the present invention for solving the problems includes: a contact detecting unit which detects a position at which a finger has come into contact and a range over which a finger has come into contact with an operating face of an operating unit; a coordinate conversion unit which converts the position detected by the contact detecting unit into coordinates, based on coordinate axes set on the operating face; a command input unit which inputs commands, based on coordinates obtained from the coordinate conversion unit; an operation recognizing unit which recognizes that an operation has been performed in which the finger is rotated while kept in contact with the operating face; and a coordinate axis setting unit which, upon the operation being recognized by the operation recognizing unit, detects, from the range where the finger has come into contact, the position where the base of the finger has come into contact and the position where the fingertip has come into contact, estimates the direction from the position where the base of the finger has come into contact toward the position where the fingertip has come into contact as being the wrist direction of the hand operating the operating unit, and sets coordinate axes on the operating face in accordance with the direction.

By setting coordinate axes of the operating face according to the orientation of the hand of the user as to the operating face in this way, the operations of the user can be recognized following the orientation of the hand of the user as to the operating face. Accordingly, regardless of the orientation of the hand of the user as to the operating face, the user can be made to perform operations with the orientation of the hand of the user as to the operating face as a reference at all times.

According to the present invention, by setting coordinate axes of the operating face according to the orientation of the hand of the user as to the operating face, the operations of the user can be recognized following the orientation of the hand of the user as to the operating face. Accordingly, regardless of the orientation of the hand of the user as to the operating face, the user can be made to perform operations with the orientation of the hand of the user as to the operating face as a reference at all times. Thus, an information processing device, information processing method, and information processing program, whereby the user can be made to perform operations easily even without visually recognizing an operating face, can be realized.

### Brief Description of Drawings

Fig. 1 is a schematic diagram illustrating the configuration of a music player device according to the present invention.
Fig. 2 is a block diagram illustrating the configuration of a music player device according to the present invention.
Fig. 3 is a schematic diagram for describing a tune switching operation according to the present invention.
Fig. 4 is a schematic diagram for describing a blind mode switching operation according to a first embodiment of the present invention.
Fig. 5 is a schematic diagram for describing a tune switching operation according to the present invention.
Fig. 6 is a flowchart for describing blind operation processing procedures according to the first embodiment of the present invention.
Fig. 7 is a block diagram illustrating the functional configuration of a music player device according to the first embodiment of the present invention.
Fig. 8 is a schematic diagram for describing a blind mode switching operation according to a second embodiment of the present invention.
Fig. 9 is a flowchart for describing blind operation processing procedures according to the second embodiment of the present invention.
Fig. 10 is a block diagram illustrating the functional configuration of a music player device according to the second embodiment of the present invention.
Fig. 11 is a schematic diagram for describing a blind mode switching operation according to another embodiment of the present invention.

### Description of Embodiments

The following is a description of the best modes for carrying out the invention (hereinafter referred to as embodiments). Note that description will be made in the following order.
1. First Embodiment (example of operation with finger erect as blind mode switching operation)
2. Second Embodiment (example of operation with finger rotated as blind mode switching operation)
3. Other Embodiments

### <1. First Embodiment>

### [1-1. Overall Configuration of Music Player Device]

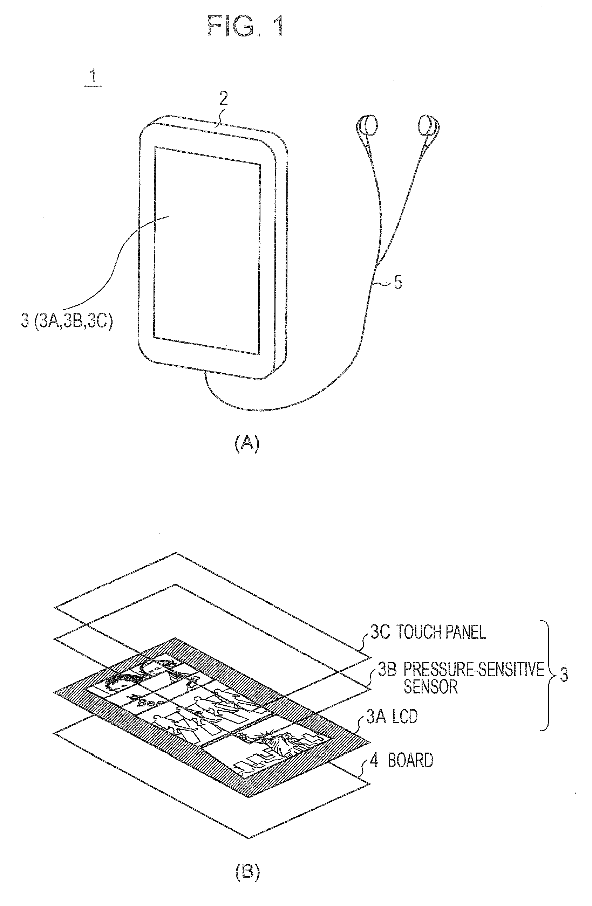

In Fig. 1, 1 denotes a music player device overall. This music player device 1 is of a portable type, and has a casing 2 of a flat rectangular shape which is such that can be grasped in one hand (so-called palm-sized). A display unit 3 of a rectangular plate form is provided on the surface of this casing 3. AS shown in Fig. 1(B), the display unit is formed by applying, on the display face of an LCD (Liquid Crystal Display) 3A, a transparent pressure-sensitive sensor 3B and a transparent touch panel 3C, in that order.

The music player device 1 is configured to, upon recognizing operation as to an operating face of the touch panel 3C, input various types of commands in accordance with the operations, such as playing and stopping tunes, turning volume up and down, and so forth. Note that here, a capacitance type touch panel 3C is used.

Also, a board 4 to which various electronic circuits have been mounted is applied to the reverse face of the display unit 3, with the board 4 and the display unit 3 being electrically connected.

Incidentally, in the following description, the casing 2 is formed so as to be relatively short in one direction, so we will also refer to this one direction as the casing transverse direction. Also, in the following description, the casing is formed so as to be relatively long in the other direction, so we will also refer to this other direction as the casing longitudinal direction. Also, here, the casing transverse direction is the horizontal direction of the casing 2, and the casing longitudinal direction is the vertical direction of the casing 2. Also, in the following description, with regard to the four side faces of the casing 2, the side face to the fight is also referred to as the right face, the side face to the left as the left face, the side face to the above as the upper face, and the side face to the bottom as the lower face.

A headphone terminal (not shown) is provided to the lower face of the casing 2, so that a headphone 5 can be connected via this headphone terminal. The music player device 1 is configured such that the user can listen to the audio of played tunes via this headphone 5.

### [1-2. Circuit Configuration of Music Player Device]

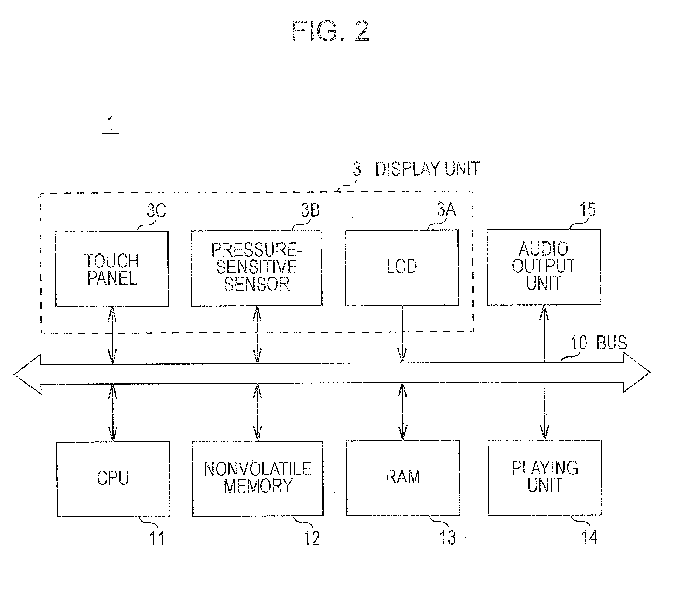

Next, the various circuit portions of the music player device 1 will be described by way of Fig. 2. With the music player device 1, the various circuit units are connected through a bus 10. A CPU 11 reads out programs stored in nonvolatile memory 12 to RAM (Random Access Memory) 13. The CPU 11 is configured to then load the programs that have been read out to the RAM 13, control the various circuit units following the loaded programs, and also execute various types of processing.

The CPU 11 is configured such that, upon being connected to an external device via a connection unit (not shown), tune data is acquired from the external device, and this tune data is stored in the nonvolatile memory 12. Incidentally, the tune data includes not only the audio data of the tune, but also data of information relating to that tune (title, artist name, album title, jacket photograph image, and so forth).

Also, upon recognizing that an operation for playing a tune has been performed by way of the touch panel 3C, the CPU 11 reads out the audio data of this tune from the nonvolatile memory 12 in response thereto, and sends this to a playing unit 14.

The playing unit 14 obtains audio signals by subjecting the audio data of this tune to predetermined playing processing such as decoding processing and amplifying processing and so forth, and sends the audio signals to an audio output unit 15. As a result, the audio of the tune based on the audio signals is output from the audio output unit via the headphone 5.

Also, the CPU 11 acquires information relating to the tune (title, artist name, album title, jacket photograph image, and so forth) from the tine data stored in the nonvolatile memory 12, and this is displayed on the LCD 3A.

The touch panel 3C has multiple capacitance sensors arrayed in a grid. The capacitance sensors are arranged so as to increase capacitance when a finger of the user comes into contact therewith.

Upon the capacitance of the capacitance sensors changing, the touch panel 3C sends capacitance sensor information indicating the value of capacitance of the capacitance sensors, and the positions of the capacitance sensors on the operating face of the touch panel 3C to the CPU 11.

Based on the capacitance sensor information, the CPU 11 detects the range where the finger of the user has come into contact on the touch panel 3C (hereinafter also referred to as contact range), and converts this contact range into coordinates based on coordinate axes set on the operating face of the touch panel 3C.

The CPU 11 then calculates the shape of the contact range based on the coordinates, and calculates the coordinates of the center of gravity of that shape. The CPU 11 then calculates the coordinates of the center of gravity as coordinates of the position where the finger of the user has come into contact (hereinafter also referred to as contact position). The CPU 11 then recognizes the user's operation as to the operating face of the touch panel 3C based on the coordinates of the contact position, and inputs various types of commands based on this operation.

The pressure-sensitive sensor 3B detects pressure of the user's finger pressing the operating face of the touch panel 3C (hereinafter also referred to as pressing pressure), and sends a pressing pressure value indicating this pressing pressure to the CPU 11. Note that here, the pressing pressure assumes a value of 0 to 255.

### [1-3. Tune Switching Operation]

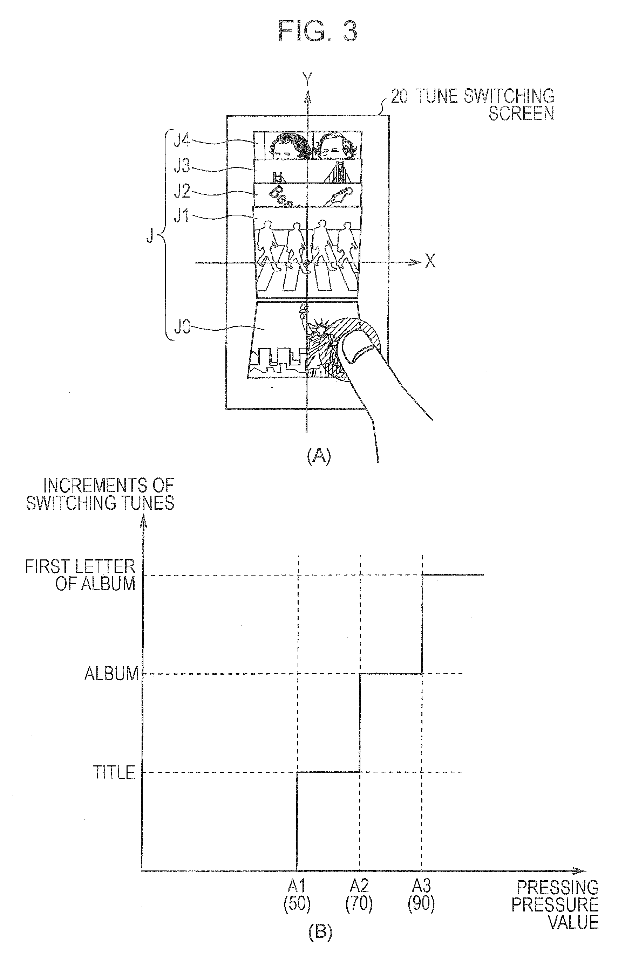

Next, tune switching operations at the music player device 1 will be described in detail. First, the CPU 11 reads out multiple jacket photograph images of tune data recorded in the nonvolatile memory 12. The CPU 11 then displays on the LCD 3A a tune switching screen 20 where these jacket photograph images J (J0, J1, J2, ..., Jn) are arrayed so as to be consecutively overlapped in the depth direction, as shown in Fig. 3(A).

Specifically, the CPU 11 displays the nearest jacket photograph image J0 laid down toward the near side, with the jacket photograph image J1 displayed behind the jacket photograph image J0 so as not to be overlapped with other jacket photograph images. In this tune switching screen 20, the CPU 11 is in a state of having selected a tine corresponding to the jacket photograph image J1.

At this time, we will say that the CPU 11 is in a normal mode where the user visually recognizes the display unit 3 and performs operations. In the normal mode, the CPU 11 sets coordinate axes on the operating face, with the center of the operating face of the touch panel 3C being the origin, the transverse direction the X axis, and the longitudinal direction the Y axis. The CPU 11 sets the coordinate axes such that the Y-axial positive direction is the upper face direction, the Y-axial negative direction is the lower face direction, the X-axial positive direction is the right face direction, and the X-axial negative direction is the left face direction. In the normal mode, the CPU 11 follows these coordinate axes to display various types of display screens (e.g., the tune switching screen 20) on the LCD 3A, for the user to perform various types of operations.

In this normal mode, let us say that the user has pressed a region to the right side within the operating face of the touch panel 3C with the finger, for example, i.e. has pressed the X-axial positive region.

At this time, the CPU 11 obtains coordinates of the contact position via the touch panel 3C, and obtains the pressing pressure values via the pressure-sensitive sensor 3B. Upon determining that the contact position is an X-axis positive region and the pressing pressure value is equal to or greater than a predetermined threshold A1 (e.g., 50) and smaller than a predetermined threshold A2 (e.g., 70), as shown in Fig. 3(B), the CPU 11 switches the tune to be selected to the next tune.

Also, upon determining that the contact position is an X-axis positive region and the pressing pressure value is equal to or greater than the threshold A2 and smaller than a predetermined threshold A3 (e.g., 90), the CPU 11 switches the tune to be selected to a tune from the next album.

Also, upon determining that the contact position is an X-axis positive region and the pressing pressure value is equal to or greater than the threshold A3, the CPU 11 switches the tune to be selected to a tune from an album of which title starts with the next letter. An album of which title starts with the next letter is, for example, an album of which the title starts with "B" if the first letter in the album title of the tune currently selected is "A".

Thus, the CPU 11 is arranged so as to change the increments in which tunes are switched in accordance to the pressing pressure, such that the stronger the user presses the touch panel 3C with a finger, the greater the increment of switching tunes is.

The CPU 11 then displays an animation like the jacket photograph image J1 corresponding to the tune which had been selected up to now being laid down to the near side, and the jacket photograph image J2 corresponding to the switched tune is newly displayed. Thus, the CPU 11 can cause the user to recognize that the selected tune has been switched to the next tune.

Also, let us say that the user has removed the finger from the touch panel 3C. At this time, the CPU 11 recognizes via the touch panel 3C that the finger of the user has been removed from the touch panel 3C, and causes the playing unit 14 to play the audio data of the selected tune (the tune corresponding to the jacket photograph image J2). As a result, the audio of this tune is output from the audio output unit 15.

Also, in this normal mode, let us say that the user has pressed a region to the left side within the operating face of the touch panel 3C with the finger, for example, i.e. has pressed the X-axial negative region.

At this time, the CPU 11 obtains coordinates of the contact position via the touch panel 3C, and obtains the pressing pressure values via the pressure-sensitive sensor 3B. Upon determining that the contact position is an X-axis negative region and the pressing pressure value is equal to or greater than the threshold A1 and smaller than the threshold A2, the CPU 11 switches the tune to be selected to the previous tune.

Also, upon determining that the contact position is an X-axis negative region and the pressing pressure value is equal to or greater than the threshold A2 and smaller than the threshold A3, the CPU 11 switches the tune to be selected to a tune from the previous album.

Also, upon determining that the contact position is an X-axis negative region and the pressing pressure value is equal to or greater than the threshold A3, the CPU 11 switches the tune to be selected to a tune from an album of which title starts with the previous letter.

The CPU 11 then displays an animation like the jacket photograph image J0 laid down to the near side being raised up, so that the jacket photograph image J0 corresponding to the switched tune is displayed in a readily-viewable manner. Thus, the CPU 11 can cause the user to recognize that the selected tune has been switched to the previous tune.

Also, let us say that the user has removed the finger from the touch panel 3C. At this time, the CPU 11 recognizes via the touch panel 3C that the finger of the user has been removed from the touch panel 3C, and causes the playing unit 14 to play the audio data of the selected tune (the tune corresponding to the jacket photograph image J0). As a result, the audio of this tune is output from the audio output unit 15.

Also, let us say that the user has touched a finger against the operating face of the touch panel 3C and performed an operation of sliding the finger upwards from downwards while playing a tune, for example. At this time, the CPU 11 recognizes via the touch panel 3C that the operation of sliding the finger upwards from downwards has been performed, and controls the audio output unit 15 so as to raise the volume of the audio to be output.

On the other hand, let us say that the user has touched a finger against the operating face of the touch panel 3C and performed an operation of sliding the finger downwards from upwards. At this time, the CPU 11 recognizes via the touch panel 3C that the operation of sliding the finger downwards from upwards has been performed, and controls the audio output unit 15 so as to lower the volume of the audio to be output.

Thus, the music player device 1 is configured so as to switch the selected tune to the next tune upon recognizing that the region of the right side within the operating face of the touch panel 3C has been pressed by the user, and to switch the selected tune to the previous tune upon recognizing that the region of the left side within the operating face of the touch panel 3C has been pressed.

Also, the music player device 1 is configured so as to play the tune selected at that time upon recognizing the that user has removed the finger from the operating face of the touch panel 3C.

Also, the music player device 1 is configured so as to raise or lower the volume output from the audio output unit 15 upon recognizing that an operation has been performed by the user on the operating face of the touch panel 3C upwards from downwards or downwards from upwards.

Thus, the music player device 1 is configured such that, when in the normal mode, user operations are recognized following the coordinate axes set on the operating face of the touch panel 3C beforehand. Accordingly, the music player device 1 is configured so as to be operated by the user in a predetermined orientation corresponding to these coordinate axes.

### [1-4. Blind Operations]

Further, the music player device 1 is provided with a blind mode where the user performs operations without visually recognizing the display unit 3. Note that the operations which the user performs without visually recognizing the display unit 3 will also be referred to as blind operations. The blind operations with the music player device 1 will be described in detail.

With the music player device 1, an operation for switching from the normal mode to the blind mode is set (hereinafter also referred to as blind mode switching operation). Specifically, the blind mode switching operation is an operation where the user keeps a finger in contact with the operating face of the touch panel 3C and in this state, changes the portion of the finger which is in contact from the ball of the finger to the fingertip. That is to say, this is an operation where the user presses the operating face of the touch panel 3C with the ball of the finger and then, without removing that finger from the operating face, bends the finger joints such that the operating face is being pressed with the fingertip. Note that the blind mode switching operation is an operation which can be performed with one finger.

Now, let us say that the user has performed such a blind mode switching operation. At this time, the CPU 11 obtains the coordinates of the contact position via the touch panel 3C, and obtains pressing pressure value via the pressure-sensitive sensor 3B. The CPU 11 then detects the transition of contact position and change in pressing pressure value from the beginning of the operation to the end of the operation.

Now, with a human finger, it is conceivable that due to the center of gravity of the ball of the finger and the center of gravity of the fingertip being different positions, the blind mode switching operation may be an operation where the contact position as to the touch panel 3C moves.

Also, it is conceivable that the pressing pressure value detected by the pressure-sensitive sensor 3B increases from the start of the operation toward the end of the operation when the blind mode switching operation is performed, due to more forced being exerted at the finger of the user when pressing with the fingertip with joints bent as compared to pressing with the ball of the finger.

Accordingly, the CPU 11 determines whether or not the contact position has moved a predetermined distance or greater, based on the coordinates of the contact position obtained via the touch panel 3C. Also, the CPU 11 determines whether or not the pressing pressure value has increased a predetermined value or greater at the ending of the operation as compared with the pressing pressure value at the beginning of the operation.

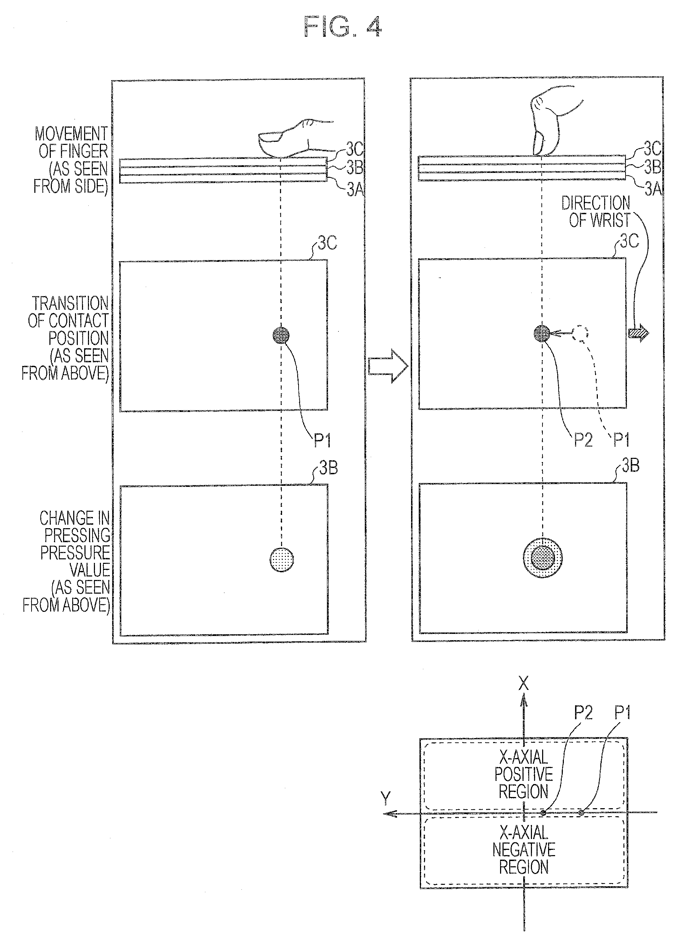

Upon detecting that the contact position has moved a predetermined distance or greater, and that the pressing pressure value has increased a predetermined value or greater at the ending of the operation as compared with the pressing pressure value at the beginning of the operation, the CPU 11 recognizes that the contact position P1 at the start of the operation is the position where the ball of the finger has come into contact, and the contact position P2 at the end of the operation is the position where the fingertip has come into contact, as shown in Fig. 4. The CPU 11 then switches to the blind mode.

Also, due to a feature of the human finger, the center of gravity of the ball of the finger is closer to the wrist side as compared to the center of gravity of the fingertip, so it is conceivable that the position where the fingertip has come into contact is closer to the wrist side of the user than the position where the ball of the finger has come into contact.

Accordingly, upon switching to the blind mode, the CPU 11 estimates that the direction heading from the contact position P2 at the end of the operation toward the contact position P1 at the start of the operation is the direction of the wrist of the hand operating the touch panel 3C. The CPU 11 then defines this wrist direction as the lower direction on the operating face of the touch panel 3C.

The CPU 11 then converts the coordinates set on the operating face of the touch panel 3C such that the lower direction of the touch panel 3C that has been defined is the Y-axial negative direction, and the line through which the contact position P1 and contact position P2 pass is the Y axis. That is to say, the operating face of the touch panel 3C is divided into the X-axis positive region (region to the right side of the Y axis) and the X-axis negative region (region to the left side of the Y axis) by the line through which the contact position P1 and contact position P2 pass.

Thus, the CPU 11 is configured so as to, upon recognizing that a blind mode switching operation has been performed, switch to the blind mode, and set coordinate axes where the wrist direction of the user is the lower direction on the operating face of the touch panel 3C, based on the blind mode switching operation.

At the time of this blind mode, let us say that the user has shifted the finger to the direction which is the right side as to the user, from the position at which the blind mode switching operation was performed, and presses the touch panel 3C, without visually recognizing the display unit 3. That is to say, the user presses the X-axis positive region in the coordinates converted by the blind mode switching operation on the touch panel 3C.

At this time, the CPU 11 obtains coordinates of the contact position via the touch panel 3C, and obtains the pressing pressure value via the pressure-sensitive sensor 3B. Then, in the same way as with the normal mode, upon determining that the coordinates of the contact position are in the X-axial positive region, the CPU 11 switches the selected tune to the next tune, or a tune of the next album, or a tune of an album of which the first letter in the title is the next letter, in accordance with the pressing pressure value.

Thus, by setting coordinate axes corresponding to the orientation of the hand of the user as to the operating face of the touch panel 3C, the CPU 11 can recognize operations of the user following the orientation of the hand of the user as to the operating face. Accordingly, the CPU 11 can cause the user to perform operations with the orientation of the hand of the user as to the operating face as a reference, so blind operations can be made to be performed.

The CPU 11 then reads audio data of audio for notifying the user that the selected tune has been switched (hereinafter also refereed to as notification audio) from the nonvolatile memory 12 and this is sent to the playing unit 14 so as to be played at the playing unit 14. As a result, this notification audio is output from the audio output unit 15. The notification audio is, for example, audio indicating the next tune, such as "Next Tune", audio indicating the title of that tune, or the like.

Accordingly, when in the blind mode, the music player device 1 can cause the user to recognize that the selected tune has been switched, even without the user visually recognizing the display unit 3.

In the same way as with the normal mode, upon detecting that the finger of the user is removed from the operating face of the touch panel 3C, the CPU 11 causes the playing unit 14 to play the audio data of the selected tune. As a result, the audio of this tune is output from the audio output unit 15.

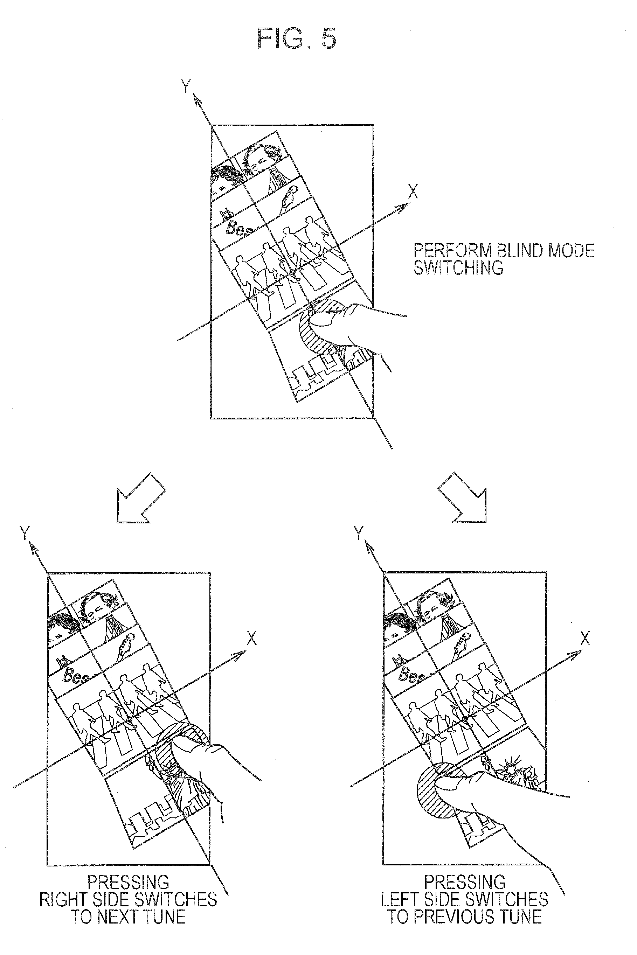

Also, when in the blind mode, let us say that the user has shifted the finger to the direction which is the left side as to the user, from the position at which the blind mode switching operation was performed, and presses the touch panel 3C, without visually recognizing the display unit 3, as shown in Fig. 5, for example. That is to say, the user presses the X-axis negative region in the coordinates converted by the blind mode switching operation.

At this time, the CPU 11 obtains coordinates of the contact position via the touch panel 3C, and obtains the pressing pressure value via the pressure-sensitive sensor 3B. Then, in the same way as with the normal mode, upon determining that the coordinates of the contact position are in the X-axial negative region, the CPU 11 switches the selected tune to the previous tune, or a tune of the previous album, or a tune of an album of which the first letter in the title is the previous letter, in accordance with the pressing pressure value. The CPU 11 then causes the playing unit 14 to play the notification audio in the same way as described above, and the audio output unit 15 to output this notification audio.

Also, in the same way as with the normal mode, upon detecting that the finger of the user is removed from the operating face of the touch panel 3C, the CPU 11 causes the playing unit 14 to play the audio data of the selected tune. As a result, the audio of this tune is output from the audio output unit 15.

Also, let us say that the user has brought a finger into contact with the operating face of the touch panel 3C while a tune is being played, for example, and the finger is slid from the wrist direction of the user toward the fingertip direction without visually recognizing the display unit 3. That is to say, the user performs an operation of sliding the finger from downwards to upwards on the coordinate axes on the operating face that have been converted by the blind mode switching operation (Y-axial positive direction).

At this time, in the same way as with the normal mode, the CPU 11 recognizes that an operation of sliding the finger from downwards to upwards has been performed via the touch panel 3C, and controls the audio output unit 15 so as to raise the volume of the output audio.

On the other hand, let us say that the user has brought a finger into contact with the operating face of the touch panel 3C while a tune is being played, for example, and the finger is slid from the fingertip direction of the user toward the wrist direction, without visually recognizing the display unit 3. That is to say, the user performs an operation of sliding the finger from upwards to downwards on the coordinate axes on the operating face that have been converted by the blind mode switching operation (Y-axial negative direction).

At this time, in the same way as with the normal mode, the CPU 11 recognizes that an operation of sliding the finger from upwards to downwards has been performed, and controls the audio output unit 15 so as to lower the volume of the output audio.

Thus, the music player device 1 is configured such that in the blind mode, in the same way as when in the normal mode, upon recognizing that the user has pressed the right region on the coordinate axes set on the operating face of the touch panel 3C, the selected tune is switched to the next tune. Also, the music player device 1 is configured such that, upon recognizing that the user has pressed the left region on the coordinate axes, the selected tune is switched to the previous tune.

Also, the music player device 1 is configured such that in the blind mode, in the same way as when in the normal mode, upon recognizing the that user has removed the finger from the operating face of the touch panel 3C, the tune selected at that time is played. Also, the music player device 1 is configured such that in the blind mode, in the same way as when in the normal mode, upon recognizing that an operation upwards from downwards or downwards from upwards has been performed on the operating face by the user following the coordinate axes set on the operating face of the touch panel 3C, the volume is raised or lowered. Note that such operations of switching tunes, playing, raising and lower volume, and so forth, can all be performed with one finger.

With the music player device 1 such as described above, by setting coordinate axes on the operating face according to the orientation of the hand of the user as to the operating face of the touch panel 3C when in the blind mode, the user operations can be recognized following the orientation of the hand of the user as to the operating face.

Accordingly, the music player device 1 can allow the user to perform operations with the orientation of the hand of the user as to the operating face as a reference, regardless of the orientation of the hand as to the operating face, and accordingly can effect blind operations.

Also, accordingly the music player device 1 can enable the user to perform blind operations such as switching tunes, playing tunes, raising and lower volume, and so forth, in the blind mode, with the same sensation as when in the normal mode.

### [1-5. Blind Operation Processing Procedures]

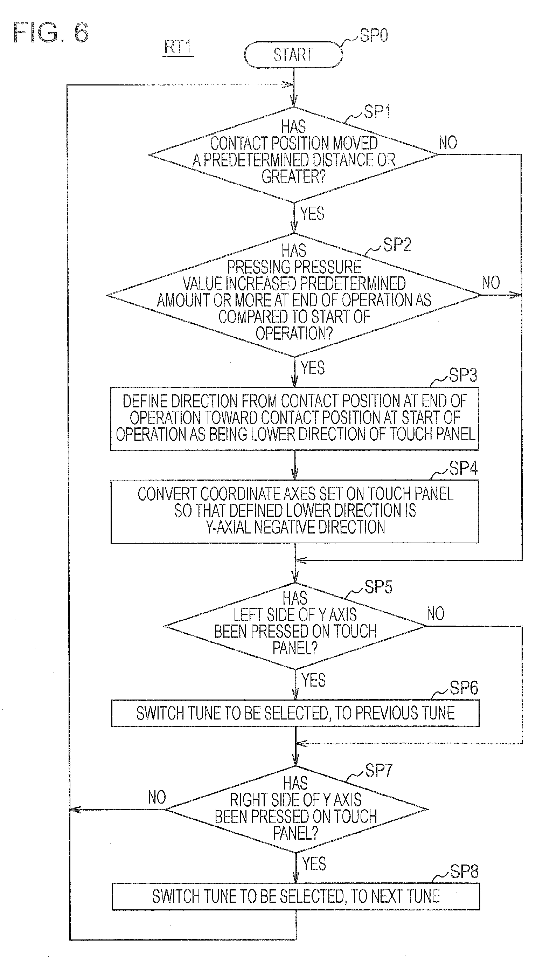

Next, operation processing procedures RT1 for blind operations by the music player device 1 described above (hereinafter also referred to as blind operation processing procedure) will be described in detail with reference to the flowchart shown in Fig. 6. Incidentally, this blind operation processing procedure RT1 is executed by the CPU 11 following a program installed in the nonvolatile memory 12.

As shown in Fig. 6, upon recognizing that a finger of the user has pressed the operating face via the touch panel 3C, the CPU 11 of the music player device 1 starts the blind operation processing procedure RT1 from step SP0, and transitions to the next step SP1.

In step SP1, the CPU 11 determines whether or not the contact position has moved a predetermined distance or greater, based on the coordinates of the contact position obtained via the touch panel 3C. In the event that a positive result is obtained in this step SP1, the CPU 11 at this time transitions to step SP2.

In step SP2, the CPU 11 determines whether or not the pressing pressure value at the end of the pressing operation has increased by a predetermined value or more as compared to the pressing pressure value at the start of the operation, based on the pressing pressure value obtained via the pressure-sensitive sensor 3B. In the event that a positive result is obtained in this step SP2, the CPU 11 at this time transitions to step SP3.

In step SP3, the CPU 11 recognizes that the user has performed a blind mode switching operation, and switches to the blind mode. Also, at this time the CPU 11 recognizes that the contact position P1 at the start of the operation is a position where the ball of the finger has come into contact, and the contact position P2 at the end of the operation is a position where the fingertip has come into contact.

The CPU 11 then estimates that the direction heading from the contact position P2 at the end of the operation (Fig. 4) toward the contact position P1 at the start of the operation (Fig. 4) is the direction of the wrist of the hand operating the touch panel 3C, defines this wrist direction as the lower direction on the operating face of the touch panel 3C, and transitions to step SP4.

In step SP4, the CPU 11 takes the lower direction defined in step SP3 as the Y-axial direction, converts the coordinates set on the operating face of the touch panel 3C such that the line through which the contact position P1 and contact position P2 pass is the Y axis, and transitions to step SP5.

On the other hand, in the event that a negative result is obtained in step SP1, this means that the user has not performed a blind mode switching operation, so in this case the CPU 11 does not perform conversion of the coordinates set on the operating face of the touch panel 3C, and transitions to step SP5.

Also, in the event that a negative result is obtained in step SP2, this means that the user has not performed a blind mode switching operation, so in this case the CPU 11 does not perform conversion of the coordinates set on the operating face of the touch panel 3C, and transitions to step SP5.

In step SP5, the CPU 11 determines whether or not the user has pressed with the finger the X-axial negative region of the coordinates set on the operating face of the touch panel 3C, i.e., the region to the left of the Y axis, based on the coordinates of the contact position obtained via the touch panel 3C. In the event that a positive result is obtained in this step SP5, this means that the user has performed a tune switching operation to select a previous tune, so the CPU 11 transitions to step SP6.

In step SP6, the CPU 11 switches the selected tune to the previous tune, or a tune of the previous album, or a tune of an album of which the first letter in the title is the previous letter, in accordance with the pressing pressure value obtained via the pressure-sensitive sensor 3B at this time, and transitions to step SP7.

On the other hand, in the event that a negative result is obtained in this step SP5, this means that the user has not performed a tune switching operation to select a previous tune, so the CPU 11 transitions to step SP7.

In step SP7, the CPU 11 determines whether or not the user has pressed with the finger the X-axial positive region of the coordinates set on the operating face of the touch panel 3C, i.e., the region to the right of the Y axis, based on the coordinates of the contact position obtained via the touch panel 3C. In the event that a positive result is obtained in this step SP7, this means that the user has performed a tune switching operation to select a next tune, so the CPU 11 transitions to step SP8.

In step SP8, the CPU 11 switches the selected tune to the next tune, or a tune of the next album, or a tune of an album of which the first letter in the title is the next letter, in accordance with the pressing pressure value obtained via the pressure-sensitive sensor 3B at this time, and returns to step SP1.

On the other hand, in the event that a negative result is obtained in this step SP7, this means that the user has not performed a tune switching operation to select a next tune, so the CPU 11 returns to step SP1. Thus, the CPU 11 repeats the blind operation processing procedure RT1.

The CPU 11 is configured so as to be able to cause the user to perform blind operations by such a blind operation processing procedure RT1.

### [1-6. Operations and Advantages]

With the above configuration, upon the operating face of the touch panel 3C being pressed by the finger of the user, the music player device 1 detects the contact position of the finger as to the operating face via the touch panel 3C. Also, the music player device 1 detects the pressing pressure value indicating the pressure with which the finger of the user has pressed the operating face at this time, via the pressure-sensitive sensor 3B.

Upon detecting that while the finger of the user is in contact with the operating face of the touch panel 3C, the contact position has moved and the pressing pressure value at the end of the operation has increased as compared to the start of the operation, the music player device 1 recognizes that the user has performed a blind mode switching operation. At this time, the music player device 1 recognizes that the contact position P1 at the start of operations is the position where the ball of the finger has come into contact with and the contact position P2 at the end of the operation is the position where the fingertip has come into contact with.

The music player device 1 then estimates the direction from the contact position P2 at the end of the operation where the fingertip has come into contact, toward the contact position P1 at the start of operation where the ball of the finger has come into contact, as being the wrist direction of the hand operating the touch panel 3C. The music player device 1 then sets coordinate axes on the operating face of the touch panel 3C with this direction as the lower direction, and sets a line passing through the position where the ball of the finger has come into contact and the position where the fingertip has come into contact as the Y axis of the coordinate axes.

Upon the operating face of the touch panel 3C being pressed by the finger of the user, the music player device 1 then detects the contact position of the finger as to the operating face of the touch panel 3C. The music player device 1 then converts the contact position into coordinates, based on the coordinate axes set on the operating face of the touch panel 3C. The music player device 1 then recognizes the various types of operations corresponding to the coordinates, and inputs various types of commands in accordance with the operations.

Thus, the music player device 1 sets coordinate axes on the operating face in accordance with the orientation of the hand of the user as to the operating face of the touch panel 3C, and accordingly can recognize user operations following the orientation of the hand of the user as to the operating face.

Accordingly, the music player device 1 can allow the user to perform operations with the orientation of the hand of the user as to the operating face as a reference, regardless of the orientation of the hand as to the operating face, and accordingly can cause the user to perform operations with the orientation of the hand of the user as to the operating face as a reference at all times.

Also, the music player device 1 has been configured such that, upon determining that the coordinates of the contact position are in a region to the right side of the Y axis, the selected tune is switched to the next tune, and upon determining that the coordinates of the contact position are in a region to the left side of the Y axis, the selected tune is switched to the previous tune.

Accordingly, it is sufficient for the user to be made to perform an operation of pressing the right side or left side with the finger with the wrist direction of the user as the lower direction, so the music player device 1 can cause the user to perform operations easily without having to learn complicated operations.

Also, the music player device 1 has been configured to cause the user to perform blind mode switching operations and blind operations by operations with one finger.

Accordingly, the music player device 1 can cause blind mode switching operations and blind operations to be performed easily even in tight spaces such as in a pocket or in a bag.

Also, accordingly, in the event of causing the user to perform blind mode switching operations and blind operations with the thumb, the music player device 1 can cause the casing 2 of the music player device 1 to be held with the four fingers not performing the operations, so the casing 2 can be held in a stable manner.

Also, the music player device 1 has been configured to cause operations of keeping the finger into contact with the operating face of the touch panel 3C and changing the portion of the finger in contact from the ball of the finger to the fingertip, as a blind mode switching operation.

Accordingly, the music player device 1 can recognize operations often performed on a touch panel normally such as touch operations, dragging operations, scrolling operations, and so forth, without being confused with the blind mode switching operation, so erroneous recognition can be prevented.

According to the above configuration, the music player device 1 has been configured so as to detect the contact position where the finger has come into contact with the operating face of the touch panel 3C. Also, the music player device 1 has been configured so as to recognize that the blind mode switching operation has been performed as to the operating face of the touch panel 3C where the finger is kept in contact and the contact portion is changed from the ball of the finger to the tip. Also, the music player device 1 has been configured so as to, upon this operation being recognized, estimate the direction from the position where the fingertip has come into contact toward the position where the ball of the finger has come into contact as being the wrist direction of the hand operating the touch panel 3C, and set coordinate axes on the operating face of the touch panel 3C corresponding to this direction. The music player device 1 then converts the contact position where the finger has come into contact with the operating face of the touch panel 3C based on the coordinate axes set on the touch panel 3C, and inputs commands based on the coordinates.

Thus, by setting coordinate axes on the operating face corresponding to the orientation of the hand of the user as to the operating face of the touch panel 3C, the music player device 1 can recognize user operations following the orientation of the hand of the user as to the operating face of the touch panel 3C.

Accordingly, the music player device 1 can allow the user to perform operations with the orientation of the hand of the user as to the operating face as a reference at all times, regardless of the orientation of the hand as to the operating face. Thus, the music player device 1 can enable the user to easily perform operations without visually recognizing the operating screen.

### [1-7. Functional Configuration of Music Player Device]

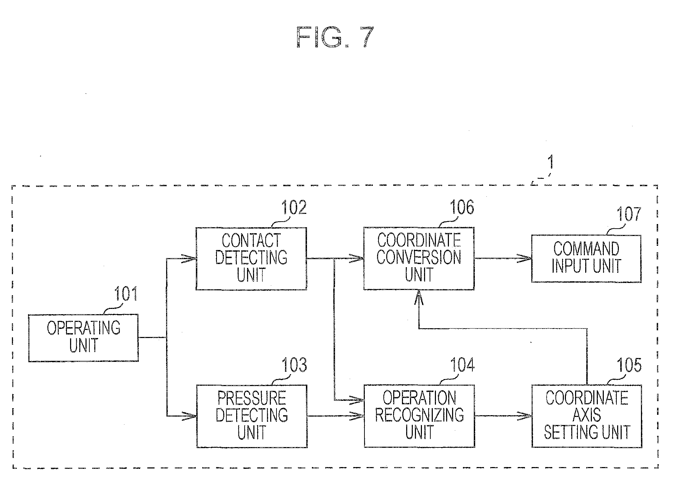

Now, the functional configuration of the music player device 1 will be described, with the above-described blind operations as the primary objective. As shown in Fig. 7, the music player device 1 has an operating unit 101, a contact detecting unit 102, a pressure detecting unit 103, an operation recognition unit 104, a coordinate axis setting unit 105, a coordinate conversion unit 106, and a command input unit 107.

The contact detecting unit 102 detects the position at which the finger has come into contact on the operating face of the operating unit 101. The pressure detecting unit 103 detects the pressing pressure of the finger as to the operating face of the operating unit 101.

Upon detecting that while the finger is in contact with the operating face of the operating unit 101, the position at which the finger is in contact with has moved and the pressing pressure of the finger as to the operating face has changed, the operation recognition unit 104 recognizes that an operation for changing the contact portion from the ball of the finger to the tip while keeping the finger in contact (the blind mode switching operation in this embodiment) has been performed.

Upon this operation being recognized by the operation recognition unit 104, the coordinate axis setting unit 105 estimates the direction from the position where the ball of the finger has come into contact toward the position where the fingertip has come into contact to be the wrist direction of the hand operating the operating unit 101, and sets coordinate axes as to the operating face of the operating unit 101 corresponding to this direction.

Based on the coordinate axes set to the operating face of the operating unit 101, the coordinate conversion unit 106 converts the position detected by the contact detecting unit 102 into coordinates. The command input unit 107 inputs commands based on the coordinates obtained from the coordinate conversion unit 106.

Due to such a functional configuration, the music player device 1 is made to be able to realize the above-described blind operations functionally. Here, the operating unit 101 is a functional unit corresponding to the touch panel 3C. Also, the contact detecting unit 102 is a functional unit corresponding to the touch panel 3C and CPU 11. Also, the pressure detecting unit 103 is a functional unit corresponding to the pressure-sensitive sensor 3B. Also, the operation recognition unit 104, coordinate axis setting unit 105, coordinate conversion unit 106, and command input unit 107 are functional units corresponding to the CPU 11.

### <2. Second Embodiment>

Next, a second embodiment of the present invention will be described in detail. This second embodiment is the same as with the above-described first embodiment except for the point that the blind mode switching operation of the music player device 1 differs, so description of the configuration of the music player device 1, tune switching operations, and so forth, which are the same portions, will be omitted.

### [2-1. Blind Operations]

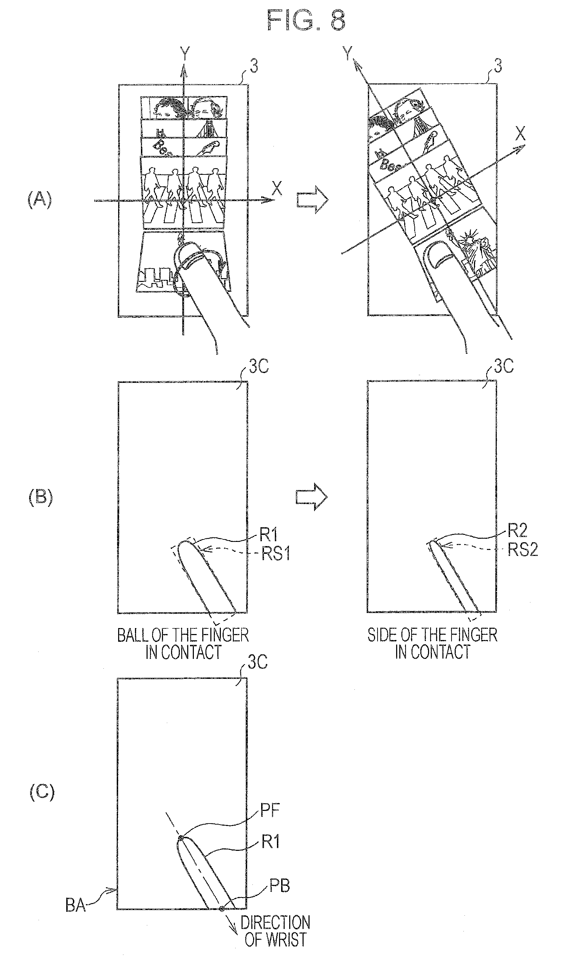

The CPU 11 displays the tune switching screen 20 on the touch panel 3C. As shown in Fig. 8(A), let us say that the user has performed an operation wherein the finger is kept in contact with the touch panel 3C in a laid state and the finger is rotated, as a blind mode switching operation. Note that this blind mode switching operation can be performed with one finger.

At this time, the CPU 11 obtains the coordinates of the contact position and the coordinates of the contact range via the touch panel 3C, and detects the transition of contact position and change in contact range from the beginning of the operation to the end of the operation.

Now, since the blind mode switching operation is an operation for changing the portion of the finger that is in contact from the ball of the finger to the side by rotating the finger, or changing to the opposite, it is conceivable that this will be an operation where the contact position as to the operating face of the touch panel 3C changes.

Accordingly, the CPU 11 determines whether or not the contact position obtained via the touch panel 3C has moved a predetermined distance or greater, based on the coordinates of the contact position obtained via the touch panel 3C.

Also, with a human finger, since the side is narrower than the ball of the finger, it is conceivable that the shape of the range where the side of the finger comes into contact with is more slender than the shape of the range where the ball of the finger is in contact.

Accordingly, as shown in Fig. 8(B), the CPU 11 calculates a rectangle RS1 of the smallest area which surrounds the contact range R1 at the start of the operation and a rectangle RS2 of the smallest area which surrounds the contact range R2 at the end of the operation, based on the coordinates of the contact range R1 at the start of the operation and the contact range R2 at the end of the operation. The CPU 11 then calculates the lengths of the short sides of the rectangle RS1 and rectangle RS2.

The CPU 11 then compares the lengths of the short sides of the rectangle RS1 and rectangle RS2, and determines whether the difference in length of the short side of the rectangle RS1 and the short side of the rectangle RS2 is equal to or greater than a predetermined value.

In the event of determining that the contact position has moved a predetermined distance or greater, and that the difference in length of the short side of the rectangle RS1 and the short side of the rectangle RS2 is equal to or greater than a predetermined value, the CPU 11 recognizes that the user has performed a blind mode switching operation, and switches to blind mode.

Also, as shown in Fig. 8(C), when performing the operation wherein the finger is kept in contact in a laid state and the finger is rotated, it is conceivable that the base of the finger of the user sticks out from the edge of the operating face of the touch panel 3C. Accordingly, in such a case, it is conceivable that a portion of the range of the ball of the finger or side of the finger in contact is in contact with an edge BA of the touch panel 3C, and that this portion is a portion where a portion of the finger close to the base thereof is in contact.

Accordingly, upon switching to blind mode, the portion where the contact range R1 at the start of the operation is in contact with the edge BA of the touch panel 3C is detected, and a middle point PB thereof is detected. The CPU 11 then detects a point PF which is the farthest from the middle point PB in the contact range R1 at the start of the operation. The CPU 11 then recognizes that the middle point PB is the position where the base of the finger is in contact, and recognizes that the point PF farthest from the middle point PB is the position where the fingertip is in contact.

The CPU 11 then estimates that the direction from the point PF toward the middle point PB is the wrist direction of the hand of the user operating the touch panel 3C. The CPU 11 then defines the direction in which the wrist of the user is as the lower direction of the operating face of the touch panel 3C, and converts the coordinates set on the operating face of the touch panel 3C in the same way as with the above-described first embodiment, accordingly.

Thus, the CPU 11 switches to the blind mode upon recognizing that a blind mode switching operation has been performed in the same way as with the first embodiment.

The CPU 11 then sets coordinate axes to the operating face of the touch panel 3C with this direction as the lower direction, and sets the line passing through the point PF and middle point PB as the Y axis of the coordinate axes.

Also, the CPU 11 recognizes user operations such as switching tunes, playing, raising and lower volume, and so forth, following the coordinate axes set on the operating face of the touch panel 3C, in the same way as with the above-described first embedment.

Accordingly, the music player device 1 can recognize user operations following the orientation of the hand of the user as to the operating face, and can enable the user to perform operations with the orientation of the hand of the user as to the operating face as a reference, and accordingly can enable blind operations to be performed.

### [2-2. Blind Operation Processing Procedures]

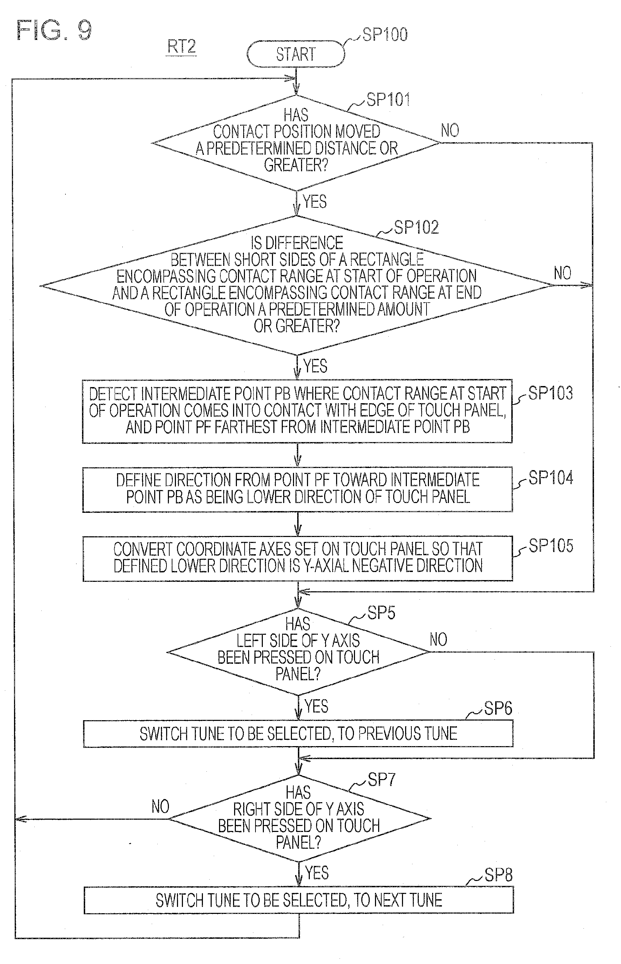

Next, operation processing procedures RT2 for blind operations by the music player device 1 described above (hereinafter also referred to as blind operation processing procedure) will be described in detail with reference to the flowchart shown in Fig. 9. Incidentally, this blind operation processing procedure RT2 is executed by the CPU 11 following a program installed in the nonvolatile memory 12.

Note that the blind operation processing procedure RT2 shown in Fig. 9 has the same steps as with the above-described blind operation processing procedure RT1 in the first embodiment denoted with the same reference numerals.

Upon recognizing that a finger of the user has pressed the operating face via the touch panel 3C, the CPU 11 of the music player device 1 starts the blind operation processing procedure RT2 from step SP100, and transitions to the next step SP101.

In step SP101, the CPU 11 determines whether or not the contact position has moved a predetermined distance or greater, based on the coordinates of the contact position obtained via the touch panel 3C. In the event that a positive result is obtained in this step SP101, the CPU 11 at this time transitions to step SP102.

In step SP102 the CPU 11 determines whether or not the difference between the length of the short side of the rectangle RS1 which surrounds the contact range R1. at the start of the operation (Fig. 8) and a rectangle RS2 which surrounds the contact range R2 at the end of the operation (Fig. 8) is a predetermined value or greater. Upon a positive result being obtained in this step SP102, the CPU 11 transitions to step SP103.

In step SP 103, the CPU 11 recognizes that the user has performed a blind mode switching operation, and switches to blind mode. The CPU 11 then detects a middle point PB where the contact range R1 at the start of the operation comes into contact with the edge BA of the touch panel 3C, and a point PF which is the farthest from the middle point PB in the contact range R1 at the start of the operation, and transitions to step SP104.

In step SP104, the CPU 11 recognizes that the middle point PB is the position where the base of the finger is in contact, and recognizes that the point PF farthest from the middle point PB is the position where the fingertip is in contact. The CPU 11 then estimates that the direction from the point PF toward the middle point PB is the wrist direction of the hand of the user operating the touch panel 3C, defines the direction in which the wrist of the user is as the lower direction of the operating face of the touch panel 3C, and transitions to step SP105.

In step SP105, the CPU 11 converts the coordinates set on the operating face of the touch panel 3C such that the lower direction defined in step SP103 is the Y-axial negative direction, and transitions to step SP5.

On the other hand, in the event that a negative result is obtained in step SP101, this means that the user has not performed a blind mode switching operation, so in this case the CPU 11 does not perform conversion of the coordinates set on the operating face of the touch panel 3C, and transitions to step SP5.

Also, in the event that a negative result is obtained in step SP102, this means that the user has not performed a blind mode switching operation, so in this case the CPU 11 does not perform conversion of the coordinates set on the operating face of the touch panel 3C, and transitions to step SP5.

The CPU 11 performs the processing of step SP5 through SP8 in the same way as with the above-described first embodiment. That is to say, in the same way as with the first embodiment, upon recognizing that a region to the right side of the Y axis has been pressed the CPU 11 switches the selected tune to the next tune, and upon recognizing that a region to the left side of the Y axis has been pressed, switches the selected tune to the previous tune, following the coordinates set on the operating face of the touch panel 3C.

With such a blind operation processing procedure RT2, the CPU can enable the user to perform blind operations.

### [2-3. Operations and Advantages]

With the above configuration, upon the operating face of the touch panel 3C being pressed by the finger of the user, the music player device 1 detects the contact position and contact range of the finger as to the operating face via the touch panel 3C.

Upon detecting that while the finger of the user is in contact with the operating face of the touch panel 3C, the contact position has moved and the length of the short side of a rectangle surrounding the contact range has changed between the start of the operation and the end of the operation, the music player device 1 recognizes that the user has performed a blind mode switching operation.

The music player device 1 then detects that the middle point PB, at the portion where the contact range R1 at the start of the operation is in contact with the edge BA of the touch panel 3C, is the position where the base of the finger is in contact, and detects that the point PF farthest from the middle point PB in the blind operation processing procedure R1 is the position where the fingertip is in contact.

The music player device 1 then estimates that the direction from the position where the fingertip has come into contact toward the position where the base of the finger has come into contact is the wrist direction of the hand of the user operating the touch panel 3C. The music player device 1 then sets coordinate axes on the operating face of the touch panel 3C such that this direction is the lower direction.

Upon the operating face of the touch panel 3C being pressed by the finger of the user, the music player device 1 then detects the contact position of the finger as to the operating face of the touch panel 3C. The music player device 1 then converts the contact position into coordinates, based on the coordinate axes set on the operating face of the touch panel 3C, i.e., coordinates matching the orientation of the hand of the user. The music player device 1 then recognizes the various types of operations corresponding to the coordinates, and inputs various types of commands in accordance with the operations.

Thus, the music player device 1 sets coordinate axes on the operating face in accordance with the orientation of the hand of the user as to the operating face of the touch panel 3C, and accordingly can recognize user operations following the orientation of the hand of the user as to the operating face.

Accordingly, the music player device 1 can allow the user to perform operations with the orientation of the hand of the user as to the operating face as a reference, regardless of the orientation of the hand as to the operating face, and accordingly can cause the user to easily perform operations with the orientation of the hand of the user as to the operating face as a reference at all times, without the user visually recognizing the operating face.

Also, the music player device 1 has been configured such that user performs an operation wherein the finger is kept in contact with the touch panel 3C in a laid state and the finger is rotated, as a blind mode switching operation.

Accordingly, the music player device 1 can be switched to the blind mode even in tight spaces where only one finger will fit in, and accordingly can cause blind operations to be performed even more-easily in tighter spaces as compared to the first embodiment.

Otherwise, the music player device 1 according to the second embodiment can yield advantages approximately the same as with the music player device 1 according to the first embodiment.

According to the above configuration, the music player device 1 has been configured so as to detect the contact position and contact range where the finger has come into contact with the operating face of the touch panel 3C. Also, the music player device 1 has been configured so as to recognize that the blind mode switching operation has been performed as to the operating face of the touch panel 3C where the finger is kept in contact and the finger is rotated. Also, the music player device 1 has been configured so as to, upon this operation being recognized, detect the position where the tip of the finger has come into contact and the position where the base of the finger has come into contact, from the contact range. The music player device 1 has been configured to then estimate the direction from the position where the fingertip has come into contact toward the position where the base of the finger has come into contact as being the wrist direction of the hand operating the touch panel 3C, and set coordinate axes on the operating face of the touch panel 3C corresponding to this direction. The music player device 1 then converts the contact position where the finger has come into contact with the operating face of the touch panel 3C based on the coordinate axes set on the touch panel 3C, and inputs commands based on the coordinates.

Thus, by setting coordinate axes on the operating face corresponding to the orientation of the hand of the user as to the operating face of the touch panel 3C, the music player device 1 can recognize user operations following the orientation of the hand of the user as to the operating face of the touch panel 3C.

Accordingly, the music player device 1 can allow the user to perform operations with the orientation of the hand of the user as to the operating face as a reference at all times, regardless of the orientation of the hand as to the operating face. Thus, the music player device 1 can enable the user to easily perform operations without visually recognizing the operating screen.

### [2-4. Functional Configuration of Music Player Device]

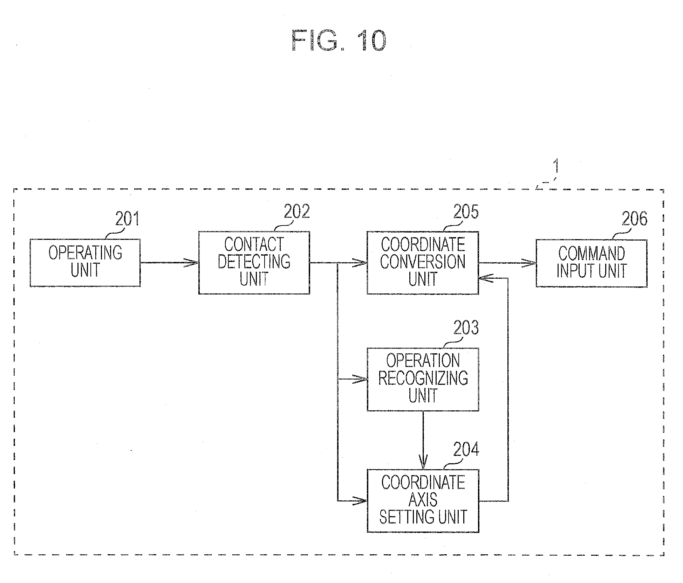

Now, the functional configuration of the music player device 1 will be described, with the above-described blind operations as the primary objective. As shown in Fig. 10, the music player device 1 has an operating unit 201, a contact detecting unit 202, an operation recognition unit 203, a coordinate axis setting unit 204, a coordinate conversion unit 205, and a command input unit 206.

The contact detecting unit 202 detects the position at which the finger has come into contact on the operating face of the operating unit 201 and the range over which the finger has come into contact. Upon recognizing that the position where the finger is in contact has moved and the shape of the range over which the finger is in contact has changed while the finger is in contact with the operating face of the operating unit 201, the operation recognition unit 203 recognizes that an operation of rotating the finger while keeping the finger in contact has been performed.

Upon this operation being recognized by the operation recognition unit 203, the coordinate axis setting unit 204 detects the position where the base of the finger has come into contact and the position where the tip of the finger has come into contact from within the range over which the finger has come into contact. The coordinate axis setting unit 204 then estimates the direction from the position where the base of the finger has come into contact toward the position where the fingertip has come into contact to be the wrist direction of the hand operating the operating unit 201, and sets coordinate axes as to the operating face of the operating unit 201 corresponding to this direction.

Based on the coordinate axes set to the operating face of the operating unit 201, the coordinate conversion unit 205 converts the position detected by the contact detecting unit 202 into coordinates. The command input unit 206 inputs commands based on the coordinates obtained from the coordinate conversion unit 205.

Due to such a functional configuration, the music player device 1 is made to be able to realize the above-described blind operations functionally. Here, the operating unit 201 is a functional unit corresponding to the touch panel 3C. Also, the contact detecting unit 202 is a functional unit corresponding to the touch panel 3C and CPU 11. Also, the coordinate conversion unit 205, command input unit 206, operation recognition unit 203, and coordinate axis setting unit 204 are functional units corresponding to the CPU 11.

### <3. Other Embodiments>

### [3-1. Other Embodiment 1]

Note that with the above-described first embodiment, the CPU 11 is configured so as to recognize that the user has performed the blind mode switching operation based on change in the pressing pressure values at the start of operations and at the end of operations.

The CPU 11 is not restricted to this, and may recognize whether or not the blind mode switching operation has been performed based on change in the shape of the contact range at the start of operations and at the end of operations, for example.

Specifically, let us say that the user has performed an operation of keeping a finger in contact with the operating face of the touch panel 3C and in this state, changing the portion of the finger which is in contact from the ball of the finger to the fingertip, as a blind mode switching operation, in the same way as with the first embodiment.

At this time, the CPU 11 obtains the coordinates of the contact position and the coordinates of the contact range via the touch panel 3C, and detects the transition of the contact position and change in the contact range from the start of operations to the end of operations.

Now, in the same way as with the first embodiment, it can be conceived that the blind mode switching operation is an operation where the contact position moves as to the touch panel 3C. Accordingly, the CPU 11 determines whether or not the contact position has moved a predetermined distance or greater, based on the coordinates of the contact position obtained via the touch panel 3C.

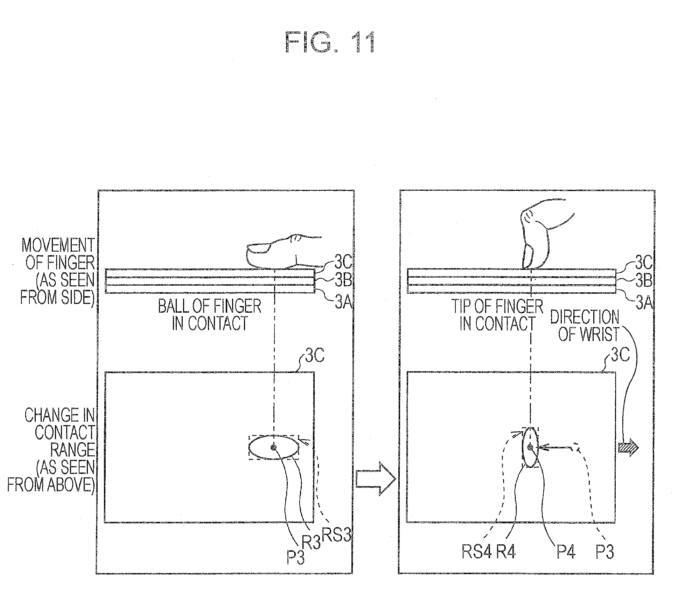

Also, as shown in Fig. 11, it can be conceived that the area of the range where the ball of the finger has come into contact is wide, and the shape of the range thereof is a general ellipse where the thickness direction of the finger is the minor axis, while the area of the range where the fingertip has come into contact is small, and the shape of the range thereof is a general ellipse where the thickness direction of the finger is the major axis. Accordingly, it can be conceived that upon changing the portion of the finger in contact from the ball of the finger to the fingertip, the major axis and minor axis of the range where the finger is in contact will be changed by 90 degrees.

Accordingly, the CPU 11 detects a rectangle RS3 of the smallest area surrounding a contact range R3 at the start of the operations and a rectangle RS4 of the smallest area surrounding a contact range R4 at the end of the operations based on the coordinates of the contact range R3 at the start of the operations and the coordinates of the contact range R4 at the end of the operations. The CPU 11 then detects the long side axis and short side axis of each of the rectangle RS3 and the rectangle RS4.

The CPU 11 then compares the rectangle RS3 surrounding the range R3 at the start of the operations with the rectangle RS4 surrounding the contact range R4 at the end of the operations, and determines whether or not the long side axis and short side axis have differed approximately 90 degrees.

In the event of determining that the contact position has moved a predetermined distance or greater, and that the long side axis and short side axis of the rectangle RS3 and the rectangle RS4 have differed approximately 90 degrees, the CPU 11 recognizes that the user has performed a blind mode switching operation.

Upon determining that the user has performed a blind mode switching operation, the CPU 11 switches to the blind mode. Also, at this time, the CPU recognizes that a contact position P3 at the start of the operations is the position where the ball of the finger has been in contact, and a contact position P4 at the end of the operations is the position where the fingertip has been in contact.

Upon switching to the blind mode, the CPU 11 then estimates the direction from the contact position P4 at the end of the toward the contact position P3 at the start of the operations as being the wrist direction of the hand operating the touch panel 3C. The CPU 11 then defines this wrist direction as being the lower direction on the operating face of the touch panel 3C, and converts coordinates set on the operating face of the touch panel 3C following this.

Thus, upon recognizing that a blind mode switching operation has been performed, the CPU 11 sets coordinate axis corresponding to the orientation of the hand of the user as to the operating face of the touch panel 3C, in the same way as with the above-described first embodiment.

Also, the CPU 11 is not restricted to this, and may recognize whether or not a blind mode switching operation has been performed based on change in the area of the contact range between the start of operations and end of operations.

As shown in Fig. 11, it is conceivable that the area of the range where the ball of the finger comes into contact is greater than the area of the range where the fingertip comes into contact. Accordingly, the CPU 11 may recognized that the user has performed a blind mode switching operation upon determining that the contact position has moved a predetermined distance or greater, and the area of the contact range R3 at the start of the operations is greater than the area of the contact range R4 at the end of the operations by a predetermined value.

Also, the CPU 11 is not restricted to this, and may recognize blind mode switching operations where the finger is kept in contact and the portion of the finger in contact is changed from the ball of the finger to the fingertip being performed, by various other methods.

Also, while in the above-described second embodiment, the CPU 11 recognizes a blind mode switching operation where the finger is rotated based on change in the shape of the contact range, but this operation may be recognized by various other methods.

### [3-2. Other Embodiment 2]

Also, with the first embodiment described above, an operation is performed as a blind mode switching operation where the finger is kept in contact with the operating face of the touch panel 3C and the portion of the finger in contact is changed from the ball of the finger to the fingertip.

Unrestricted to this, an operation may be performed as a blind mode switching operation where the finger is kept in contact with the operating face of the touch panel 3C and the portion of the finger in contact is changed from the fingertip to the ball of the finger. Alternatively, an arrangement may be made wherein recognition is made of a blind mode switching operation for either case of the user performing an operation where the portion of the finger in contact is changed from the ball of the finger to the fingertip, or performing an operation of opposite change.

In this case, upon the user performing a blind mode switching operation, the CPU 11 compares the pressing pressure values at the start of operation and end of operation, and determines which pressing pressure value is greater. In the event that the pressing pressure at the start of operation is greater, and the CPU 11 recognizes that the contact position at the start of operation is the position where the fingertip has come into contact, and that the contact position at the end of operation is the position where the ball of the finger has come into contact. On the other hand, in the event that the pressing pressure at the end of operation is greater, and the CPU 11 recognizes that the contact position at the end of operation is the position where the fingertip has come into contact, and that the contact position at the start of operation is the position where the ball of the finger has come into contact.

### [3-3. Other Embodiment 3]

Further, with the first embodiment described above, the CPU 11 is configured so as to convert the coordinates set on the operating face of the touch panel 3C at the time of the blind mode switching operation, such that the line passing through the position where the fingertip has come into contact and the position where the ball of the finger has come into contact is the Y axis.

The CPU 11 is not restricted to this, and may convert the coordinates set on the operating face of the touch panel 3C at the time of the blind mode switching operation, such that a line orthogonal to this Y axis and which passes through the position where the fingertip comes into contact for example, is the X axis.

Accordingly, the CPU 11 can increase the command input assigned to user operations, such as pressing operations by the finger of the user, for example. For example, the CPU 11 may be configured such that a tune is played when the user presses above the X axis and playing is stopped when below the X axis is pressed.

### [3-4. Other Embodiment 4]

Further, with the first and second embodiments described above, the CPU 11 is configured such that upon the user pressing the right side of the Y axis, the selected tune is switched to the next tune, and upon the user pressing the left side of the Y axis, the selected tune is switched to the previous tune.

The CPU 11 is not restricted to this, and may recognize various other user operations based on the coordinate axes set on the touch panel 3C, and assign other various command inputs thereto.

### [3-5. Other Embodiment 5]

Further, with the second embodiment described above, the CPU 11 is configured so as to detect a middle point PB at a portion where the contact range R1 at the start of operation comes into contact with the edge BA of the touch panel 3C as the position where the base of the finger has come into contact. The CPU 11 is also configured to detect the farthest point PF from the middle point PB in the contact range R1 as being the position where the fingertip has come into contact.

The CPU 11 is not restricted to this, and may detect the shape of the contact range R1 at the start of operation and detect the side thereof where the shape is tapered, as the position where the fingertip has come into contact, and further detect the position farthest therefrom in the contact range R1 as being the position where the base of the finger has come into contact. Also, the CPU 11 is not restricted to this, and may detect the position where the base of the finger has come into contact and the position where the fingertip has come into contact by various other methods.

### [3-6. Other Embodiment 6]

Further, with the first embodiment described above, the CPU 11 is configured so as to estimate the direction from the position where the finger tip has come into contact to the position where the ball of the finger has come into contact in the blind mode switching operation as being the wrist direction of the user. The CPU 11 is also configured so as to set coordinate axes where this direction is the lower direction on the operating face of the touch panel 3C.

The CPU 11 is not restricted to this, and may set various other coordinate axes on the operating face of the touch panel 3C, as long as being coordinate axes corresponding to the direction estimated as being the wrist direction of the user.

For example, the CPU 11 may be configured to set coordinate axes with the direction thereof shifted from the direction estimated to be the user wrist direction in the blind mode switching operation by a predetermined angle (e.g., 10 to 30 [°]) as the lower direction. It is also conceivable that users will operate the operating face with the wrist somewhat offset from the lower direction of the operating face. In such a case, the CPU 11 can enable the user to perform operations in the blind mode with the same sensation as when in the normal mode, by setting coordinate axes with a direction shifted by a predetermined angle from the direction estimated as being the wrist direction of the user as the lower direction. Accordingly, the CPU 11 can even further improve the operability when in the blind mode.

### [3-7. Other Embodiment 7]

Further, with the first and second embodiments described above, a program for causing the music player device 1 to execute the operation processing is stored in the nonvolatile memory 12.

Unrestricted to this, the program may be stored in a predetermined recording medium such as a CD (Compact Disc) or the like, with the CPU 11 reading out the program from the recording medium and executing. Also, the CPU 11 may download the program from a predetermined server on the Internet and install this in the nonvolatile memory 12.

### [3-8. Other Embodiment 8]

Further, with the embodiments described above, the music player device 1 serving as an information processing device is provided with the touch panel 3C serving as a contact detecting unit, the pressure-sensitive sensor 3B serving as a pressure detecting unit, and the CPU 11 serving as a contact detecting unit, coordinate conversion unit, command input unit, operation recognition unit, and coordinate axis setting unit.

Unrestricted to this, as long as the same functions are had, the functions of the above-described music player device 1 may be configured by various other types of hardware or software. For example, the contact detecting unit may be realized of a touch panel alone, and the coordinate conversion unit, command input unit, operation recognition unit, and coordinate axis setting unit may each be realized with individual hardware.

### [3-9. Other Embodiment 9]

Further, the present invention is not restricted to the above-described first and second embodiments and other embodiments 1 through 8 described so far. That is to say, the present invention encompasses in the scope thereof forms optionally combining part of all of the above-described first and second embodiments and other embodiments 1 through 8, or forms of which parts thereof have been extracted. For example, the above-described second embodiment and the other embodiment 3 may be combined.

### Industrial Applicability

The information processing device, information processing method, and information processing program according to the present invention can be applied to, for example, portable type audio players, PDAs (Personal Digital Assistant), cellular phones, and other various types of electronic equipment.

### Reference Signs List

- 1: music player device
- 3: display unit
- 3A: LCD
- 3B: pressure-sensitive sensor
- 3C: touch panel
- 11: CPU
- 101, 201: operating unit
- 102, 202: contact detecting unit
- 103: pressure detecting unit
- 104, 203: operation recognition unit
- 105, 204: coordinate axis setting unit
- 106, 205: coordinate conversion unit
- 107, 206: command input unit
- P1, P2, P3, P4: contact positions
- R1, R2, R3, R4: contact ranges
- PB: middle point
- PF: point

## Claims

1. An information processing device comprising:
a contact detecting unit which detects a position at which a finger has come into contact with an operating face of an operating unit;
a coordinate conversion unit which converts said position detected by said contact detecting unit into coordinates, based on coordinate axes set on said operating face;
a command input unit which inputs commands, based on coordinates obtained from said coordinate conversion unit;
an operation recognizing unit which recognizes that an operation has been performed as to said operating face in which, with the finger kept in contact with said operating face, the contact portion is changed from the ball of the finger to the tip, or the opposite thereof; and
a coordinate axis setting unit which, upon said operation being recognized by said operation recognizing unit, estimates the direction from the position where the ball of the finger has come into contact toward the position where the tip of the finger has come into contact as being the wrist direction of the hand operating said operating unit, and sets coordinate axes on said operating face in accordance with said direction.

2. The information processing device according to Claim 1, further comprising:
a pressure detecting unit which detects the pressing pressure of the finger as to said operating face;
wherein, upon detecting that the position where the finger is in contact with has changed or the pressing pressure of the finger as to said operating face has changed while the finger is in contact with said operating face, said operation recognizing unit recognizes that an operation has been performed wherein the contact portion is changed from the ball of the finger to the tip, or the opposite thereof, with the finger kept in contact with said operating face.

3. The information processing device according to Claim 2, wherein said coordinate axis detecting unit sets coordinate axes on said operating face with said wrist direction being the lower direction, and sets a line passing through said position where the ball of the finger has been in contact with said position where the tip of said finger has been in contact as the Y axis of said coordinate axes.

4. The information processing device according to Claim 3, wherein said command input unit inputs a first command in the event that the coordinates obtained from said coordinate converting unit are in a region to the right side as to the Y axis of said coordinate axes, and inputs a second command in the event that the coordinates obtained from said coordinate converting unit are in a region to the left side as to the Y axis of said coordinate axes.

5. The information processing device according to Claim 1, wherein said contact detecting unit detects a range where the finger has come in contact with said operating face and the range where the finger has come into contact with said operating face;
and wherein, upon detecting that the position where the finger has come into contact has moved and that the shape of the range where the finger has come into contact has changed while the finger is in contact with said operating face, said operation recognizing unit recognizes that an operation has been performed wherein the contact portion is changed from the ball of the finger to the tip, or the opposite thereof, with the finger kept in contact with said operating face.

6. An information processing device comprising:
a contact detecting unit which detects a position at which a finger has come into contact and a range over which a finger has come into contact with an operating face of an operating unit;
a coordinate conversion unit which converts said position detected by said contact detecting unit into coordinates, based on coordinate axes set on said operating face;
a command input unit which inputs commands, based on coordinates obtained from said coordinate conversion unit;
an operation recognizing unit which recognizes that an operation has been performed in which the finger is rotated while kept in contact with said operating face; and
a coordinate axis setting unit which, upon said operation being recognized by said operation recognizing unit, detects, from the range where the finger has come into contact, the position where the base of the finger has come into contact and the position where the fingertip has come into contact, estimates the direction from the position where the base of the finger has come into contact toward the position where the fingertip has come into contact as being the wrist direction of the hand operating said operating unit, and sets coordinate axes on said operating face in accordance with said direction.

7. The information processing device according to Claim 6, wherein, upon detecting that the position where the finger has come into contact has moved and that the position where the finger is in contact with and the shape of the range where the finger has come into contact has changed while the finger is in contact with said operating face, said operation recognizing unit recognizes that an operation has been performed wherein the finger is rotated while kept in contact with said operating face.

8. The information processing device according to Claim 6, wherein said coordinate axis setting unit detects, from the range where the finger has come into contact, the position where the base of the finger has come into contact and the position where the fingertip has come into contact, based on the shape of the range where the finger has come into contact.

9. An information processing method comprising:
a contact detecting unit detecting a position at which a finger has come into contact with an operating face of an operating unit;
an operation recognizing unit recognizing that an operation has been performed in which, with the finger kept in contact with said operating face, the contact portion is changed from the ball of the finger to the tip, or the opposite thereof;
upon said operation being recognized by said operation recognizing unit, a coordinate axis setting unit estimating the direction from the position where the ball of the finger has come into contact toward the position where the tip of the finger has come into contact as being the wrist direction of the hand operating said operating unit, and setting coordinate axes on said operating face in accordance with said direction;
a coordinate conversion unit converting said position detected by said contact detecting unit into coordinates, based on coordinate axes; and
a command input unit inputting commands, based on coordinates obtained from said coordinate conversion unit.

10. A program for causing a computer to execute:
a step for a contact detecting unit to detect a position at which a finger has come into contact with an operating face of an operating unit;
a step for an operation recognizing unit to recognize that an operation has been performed in which, with the finger kept in contact with said operating face, the contact portion is changed from the ball of the finger to the tip, or the opposite thereof;
a step for a coordinate axis setting unit to, upon said operation being recognized by said operation recognizing unit, estimate the direction from the position where the ball of the finger has come into contact toward the position where the tip of the finger has come into contact as being the wrist direction of the hand operating said operating unit, and set coordinate axes on said operating face in accordance with said direction;
a step for a coordinate conversion unit to convert said position detected by said contact detecting unit into coordinates, based on coordinate axes; and
a step for a command input unit to input commands, based on coordinates obtained from said coordinate conversion unit.
